# EUROPÄISCHE PATENTANMELDUNG

(11) **EP 3 051 313 A2**
(43) Veröffentlichungstag der Anmeldung: **03.08.2016**
(21) Anmeldenummer: 16150715.7
(22) Anmeldetag: 11.01.2016
(51) Int. Cl.: G01S 17/93, G01S 7/481, G01S 17/42, G01S 13/93

(54) **FAHRERASSISTENZSYSTEM FÜR KRAFTFAHRZEUGE, VERFAHREN ZUM BETRIEB EINES SOLCHEN, VERWENDUNGEN DAFÜR SOWIE KRAFTFAHRZEUG DAMIT**

(30) Priorität: 29.01.2015 DE 102015101266
(71) Anmelder: Valeo Schalter und Sensoren GmbH, 74321 Bietigheim-Bissingen (DE)
(72) Erfinder: Simon, Jan, 74321 Bietigheim-Bissingen (DE)

(57) **Zusammenfassung**

Die Erfindung betrifft ein Fahrerassistenzsystem für Kraftfahrzeuge (1) zur Umsetzung mindestens einer auf das seitliche Umfeld des Kraftfahrzeugs (1) bezogenen Assistenzfunktion, wobei mittels einer Sensorik Detektionsinformationen über Objekte im seitlichen Umfeld erfasst werden und eine Aktorik die Assistenzfunktion in Abhängigkeit der Detektionsinformation ausführt. Die Erfindung betrifft außerdem ein Verfahren zum Betrieb eines solchen Fahrerassistenzsystems.

Um die Umsetzung einer auf das seitliche Umfeld eines Kraftfahrzeugs (1) bezogenen Assistenzfunktion zu verbessern ist erfindungsgemäß vorgesehen, dass die Sensorik das Umfeld beleuchtet und mittels eines mehrkanaligen Empfangssensors (6) mit mehreren vertikal aufgereihten Empfangskanälen jeweiliger optoelektronischer Detektoren, welche jeweils mit ihrem optischen Öffnungswinkel einen Teil (11) des gesamten Sichtfelds (12) des Empfangssensors (6) erfassen, an Objekten reflektiertes Licht empfängt und die Detektoren jeweils eine der empfangenen Rückstreuung entsprechende Empfangsinformation bereitstellen. Eine Auswertungseinheit ermittelt aus den Empfangsinformationen der Detektoren dreidimensionale Detektionsinformationen und stellt diese der Aktorik bereit.

## Beschreibung

Die Erfindung betrifft ein Verfahren zum Betrieb eines Fahrerassistenzsystems für Kraftfahrzeuge gemäß dem Oberbegriff des Anspruchs 1. Die Erfindung betrifft außerdem ein Fahrerassistenzsystem für Kraftfahrzeuge gemäß dem Oberbegriff des Anspruchs 5 sowie gemäß Anspruch 8 ein Kraftfahrzeug mit einem solchen Fahrerassistenzsystem. Ferner betrifft die Erfindung gemäß den Ansprüchen 10, 11, oder 12 Verwendungen eines solchen Verfahrens oder eines solchen Fahrerassistenzsystems.

Fahrerassistenzsysteme werden bekanntlich im Automobilbereich eingesetzt, um den Fahrer beim Führen seines Kraftfahrzeugs zu unterstützen. Sämtlichen Fahrerassistenzsystemen ist gemeinsam, dass ihre Assistenzfunktion in der Deckung eines Assistenzbedarfs beim Fahrer liegt. Dieser Assistenzbedarf kann darin bestehen, in gefährlichen Situationen unterstützt zu werden, oder beispielsweise darin, die Leistungsgrenzen der menschlichen Wahrnehmung zu überwinden. Zur Umsetzung der Assistenzfunktion umfassen Fahrerassistenzsysteme eine entsprechende Sensorik und Aktorik.

Das Interesse richtet sich vorliegend auf Assistenzfunktionen, welche auf das seitliche Umfeld des Kraftfahrzeugs bezogen sind. Zur Umsetzung derartiger Assistenzfunktionen werden mittels einer Sensorik Detektionsinformationen über Objekte im seitlichen Umfeld erfasst und die Assistenzfunktionen von der Aktorik in Abhängigkeit der Detektionsinformation ausgeführt. Die Aktorik kann dabei je nach Assistenzbedarf eine Warnfunktion sein, beispielsweise zur Warnung vor einer Gefahr einer Kollision, oder ein aktive Funktion sein, bei der in das dynamische Verhalten des Kraftfahrzeugs, unabhängig von dem Fahrer, durch Steuerung oder Regelung eingegriffen wird.

DE 10 2005 039 895 A1 offenbart ein System für Spurverlassenswarnung und/oder Spurhaltefunktion in einem Kraftfahrzeug, wobei eine in Fahrtrichtung des Kraftfahrzeugs ausgerichtete Sensoreinheit zur Erkennung der Fahrspuren und eine seitlich zum Kraftfahrzeug ausgerichtete Sensoreinheit zum Abtasten der Mittelleitplanke vorgesehen ist. Das bekannte Fahrerassistenzsystem sieht als geeignete Sensoren zum einen auf Lichtlaufzeit basierende CMOS-Bildsensoren vor. Alternativ oder kumulativ werden auch optische Lasermesssysteme oder Radarsensoren, beziehungsweise Ultraschallsensoren, als geeignet angesehen.

Für Assistenzfunktionen zur Parkhilfe sind Ultraschallsensoren bekannt, mit denen Hindernisse in einer Parklücke erkannt werden und dadurch das Einparken erleichtert werden soll. Ultraschallsensoren können jedoch in ihrem Betrieb nur eine geringe Auflösung bieten, da die Wiederholrate durch die Ausschwingzeit durch die Membran begrenzt ist.

DE 10 2004 040 399 A1 offenbart ein Türsystem für ein Kraftfahrzeug mit einem Umgebungssensor zum Erfassen eines Hindernisses in einer Umgebung des Kraftfahrzeugs und einem Türsensor zur Ausgabe eines von einer Einleitung eines Öffnens der Tür abhängigen Ausgangssignals. Das bekannte Türsystem weist außerdem eine Steuerung zum Erkennen einer drohenden Kollision zwischen Tür und dem Hindernis in Abhängigkeit des Ausgangssignals des Umgebungssensors auf. Bei Erkennung einer drohenden Kollision zwischen Tür und dem Hindernis soll eine Warnvorrichtung angesteuert werden. Das bekannte Türsystem für ein Kraftfahrzeug soll zur Überwachung einer Seitentür oder einer Heckklappe eines Kraftfahrzeugs eingesetzt werden. Der Umgebungssensor des bekannten Systems ist ein Ultraschallsensor oder ein Radar- oder Lasersensor.

Der Erfindung liegt die Aufgabe zugrunde, die Umsetzung einer auf das seitliche Umfeld eines Kraftfahrzeugs bezogenen Assistenzfunktion durch ein entsprechendes Fahrerassistenzsystem zu verbessern.

Diese Aufgabe wird erfindungsgemäß durch ein Verfahren zum Betrieb eines Fahrerassistenzsystems mit den Merkmalen des Anspruchs 1 gelöst. Außerdem wird die Aufgabe durch ein Fahrerassistenzsystem mit den Merkmalen des Anspruchs 5 sowie ein Kraftfahrzeug mit einem solchen Fahrerassistenzsystem gemäß Anspruch 8 gelöst. Ferner umfasst die Erfindung Verwendungen eines derartigen Verfahrens oder eines derartigen Fahrerassistenzsystems mit den Merkmalen der Ansprüche 10, 11 oder 12.

Erfindungsgemäß ist vorgesehen, dass die Sensorik des Fahrerassistenzsystems das seitliche Umfeld des Kraftfahrzeugs beleuchtet und mittels eines mehrkanaligen Empfangssensors mit mehreren vertikal aufgereihten Empfangskanälen jeweiliger optoelektronischer Detektoren an Objekten reflektiertes Licht empfängt. Die Detektoren erfassen dabei jeweils mit ihren optischen Öffnungswinkeln einen Teil des gesamten Sichtfelds des Empfangssensors und stellen jeweils eine der empfangenen Rückstreuung entsprechende Empfangsinformation bereit. Eine Auswertungseinheit ermittelt aus den Empfangsinformationen der Detektoren dreidimensionale Detektionsinformationen zu dem detektierten Objekt und stellt die Detektionsinformation der Aktorik des Fahrerassistenzsystems zum Verfügung.

Jeder Detektor stellt ein Teilsichtfeld entsprechend seinem optischen Öffnungswinkel bereit, welcher durch eine geeignete Optik wunschgemäß eingestellt werden kann. Der Öffnungswinkel kann dabei nach Genauigkeitsbedarf zwischen etwa 10 °und 90° bestimmt sein, wobei sich mehr oder weniger große auswertbare Überschneidungsbereiche der Teilsichtfelder ergeben. Der Öffnungswinkel ist dabei ein Azimutwinkel einer durch die Reihe der Empfangskanäle bestimmten Ebene. Der optische Öffnungswinkel in Elevationsrichtung beträgt etwa 1°bis 3°. Das Sichtfeld der Sensorik ist somit ein multiples Sichtfeld entsprechend der Mehrzahl der Empfangskanäle, welche das an Objekten reflektierte Licht über Rückstreuung erfassen. Durch Auswertung und Analyse der erfassten Empfangsinformationen können Detektionsinformationen mit dreidimensionalen Lageinformationen über Objekte in dem Sichtfeld ermittelt werden, beispielsweise auf der Grundlage des Prinzips der Lichtlaufzeitmessung. Diese Technologie wird als LEDDAR ("Light-emitting diode detection and ranging") bezeichnet. Die "LEDDAR"-Technologie analysiert die durch Rückstreuung zurücklaufenden Lichtwellen mit entsprechenden Algorithmen, wobei eine dreidimensionale Information über Objekte wie Fahrzeuge, Fußgänger, Radfahrer oder Hindernisse ermittelt werden kann, aber auch Informationen über weiche Objekte wie Nebel, Schnee oder dergleichen. Eine vergleichbare Analyse der Empfangssignale eines mehrkanaligen Detektors wurde in US 8,242,476 B2 in stationären Einrichtungen zur Erfassung des Straßenverkehrs in einer Anordnung über der Straße vorgeschlagen, beispielsweise in einer Lichtzeichenanlage. Diese Technologie nimmt die Erfindung zur Verwendung bei Detektionen im seitlichen Umfeld eines Kraftfahrzeugs in Bezug.

Die Erfindung hat erkannt, dass mit Hilfe der "LEDDAR"-Technologie bei der Umsetzung von auf das seitliche Umfeld des Kraftfahrzeugs bezogenen Assistenzfunktionen sehr hohe Auflösungen und hohe Genauigkeit der Detektionsinformation erreichbar ist. Die Empfangsinformationen der mehreren Empfangskanäle der Sensorik können sehr rasch kompiliert werden, beispielsweise mehrere tausend Mal pro Sekunde, wodurch sehr genaue dreidimensionale Detektionsinformationen bereitgestellt werden können. Auch mit einem geringen optischen Öffnungswinkel in Elevationsrichtung von beispielsweise 1°bis 3°können durch die hohe Auflösung sehr genaue Dete ktionsergebnisse bereit gestellt werden.

Eine bevorzugte Ausführungsform der Erfindung sieht eine Leuchtdiode (LED) als Leuchtmittel der Sensorik vor.

Vorteilhaft wird aus der Empfangsinformation der mehreren optoelektronischen Detektoren der Abstand und die Höhe eines Objekts als Detektionsinformation ermittelt, welche für eine Vielzahl von Assistenzfunktionen für das seitliche Umfeld eines Kraftfahrzeugs unmittelbar herangezogen werden können.

Besonders vorteilhaft werden die dreidimensionalen Detektionsinformationen mit einer Zuordnung zu den jeweiligen Empfangskanälen in einer virtuellen Umgebungskarte abgespeichert und laufend aktualisiert. Die virtuelle Umgebungskarte wird der Aktorik bereitgestellt, welche somit sehr genaue Informationen über das seitliche Umfeld des Kraftfahrzeugs erhält und damit die Assistenzfunktion optimal umsetzen und den Assistenzbedarf des Fahrers decken kann.

Gemäß einer vorteilhaften Ausführungsform ist eine Sensorik mit sechzehn Empfangskanälen vorgesehen. Derartige Sensoreinheiten sind bereits konfiguriert und mit einer abgestimmten Elektronik verfügbar, so dass eine für die Ausführung der Erfindung geeignete Sensoreinheit mit geringem Aufwand beschafft werden kann.

Die erfindungsgemäße Ermittlung von dreidimensionalen Detektionsinformationen und Bereitstellung dieser Detektionsinformationen für die Aktorik eines Fahrerassistenzsystems, vorzugsweise in einer virtuellen Umgebungskarte, wird gemäß einem Aspekt der Erfindung für aktive oder passive Assistenzfunktionen zur Parkhilfe verwendet. Dabei werden mittels des mehrkanaligen Empfangssensors Parklücken vermessen, wobei die Tiefe und die Höhe sowie der Abstand darin befindlicher Objekte erfasst werden kann und die Aktorik entsprechend ihrer Funktion geeignete Maßnahmen durchführt.

Nach einem weiteren Aspekt der Erfindung wird das Verfahren zum Betrieb eines Fahrerassistenzsystems mit Bereitstellung dreidimensionaler Detektionsinformationen und vorzugsweise einer virtuellen Umgebungskarte beziehungsweise ein entsprechendes Fahrerassistenzsystem für aktive oder passive Assistenzfunktionen zur Reaktion auf Fahrbahnverengungen und/ oder nah am Fahrzeug liegende Objekte im Umfeld des Kraftfahrzeugs verwendet.

Nach einem weiteren Aspekt der Erfindung wird das erfindungsgemäße Verfahren beziehungsweise das erfindungsgemäße Fahrerassistenzsystem für aktive oder passive Assistenzfunktionen für Seitentürsysteme eines Kraftfahrzeugs verwendet. Dabei kann das Assistenzsystem die Überwachung der Seitentür übernehmen oder steuern. Bei drohender Kollision ist vorteilhaft eine Warnung vorgesehen oder ein Eingriff in die Türbewegung. Dabei wird die Türbewegung aktiv gestoppt, um Schäden an der Tür zu vermeiden.

Gemäß einer vorteilhaften Ausführungsform der Erfindung wird die Sensorik in Abhängigkeit einer vorgegebenen Geschwindigkeit des Kraftfahrzeugs oder bei Eintritt eines bestimmten Ereignisses aktiviert. Hierzu wird der Elektronik des Fahrerassistenzsystems, beispielsweise der Auswertungseinheit oder einer Steuereinheit, an welche die Sensorik und die Aktorik angeschlossen sind, eine entsprechende Aktivierungsinformation zugeführt. Ein derartiges Ereignis, bei dem das Fahrerassistenzsystem aktiviert wird, ist beispielsweise bei einer Verwendung für Seitentürsysteme eines Kraftfahrzeugs die Feststellung der Öffnung einer Tür des Kraftfahrzeugs. Den zu überwachenden Seitentüren ist vorteilhaft ein Türsensor zugeordnet, welcher den Schließzustand der Tür überwacht und bei Öffnen der Tür ein entsprechendes Aktivierungssignal für das Fahrerassistenzsystem erzeugt.

Vorteilhaft sind die Empfangskanäle der Detektoren im Bereich eines Stoßfängers des Kraftfahrzeugs angeordnet, wodurch eine optimale Detektion von Objekten im seitlichen Umfeld des Kraftfahrzeugs gewährleistet ist.

Ausführungsbeispiele der Erfindung sind nachstehend anhand der Zeichnung näher erläutert. Es zeigen:
- Fig. 1:: eine perspektivische Darstellung eines Kraftfahrzeugs mit einem Fahrerassistenzsystem zur Umsetzung einer auf das seitliche Umfeld des Kraftfahrzeugs bezogenen Assistenzfunktion,
- Fig. 2:: eine Prinzipskizze eines Ausführungsbeispiels eines Fahrerassistenzsystems, welches eine auf das seitliche Umfeld des Kraftfahrzeugs bezogene Assistenzfunktion umsetzt.

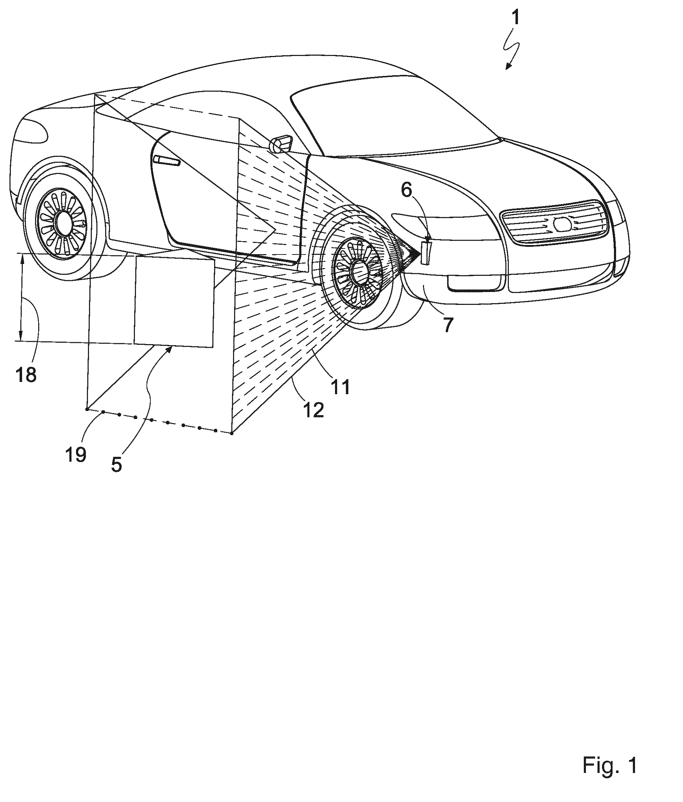

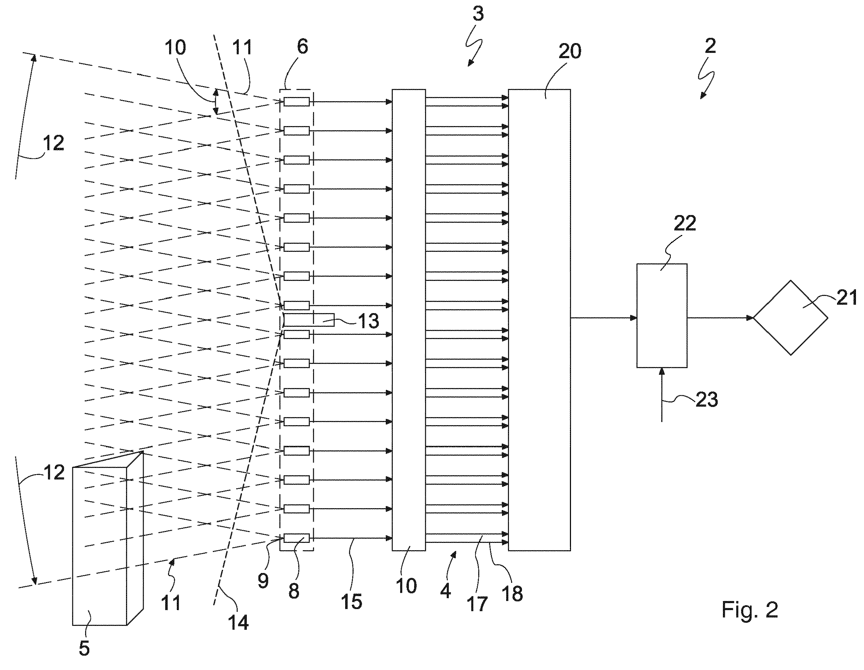

Fig. 1 zeigt ein Kraftfahrzeug 1 mit einem nachstehend unter Einbeziehung von Fig. 2 näher erläuterten Fahrerassistenzsystem 2 zur Umsetzung einer auf das seitliche Umfeld des Kraftfahrzeugs 1 bezogenen Assistenzfunktion. Das Fahrerassistenzsystem 2 umfasst eine Sensorik 3 zur Ermittlung von Detektionsinformationen 4 über Objekte 5 im seitlichen Umfeld des Kraftfahrzeugs 1. Zur Bereitstellung der Detektionsinformation 4 umfasst die Sensorik 3 einen mehrkanaligen Empfangssensor 6, welcher im Bereich eines Stoßfängers 7 des Kraftfahrzeugs 1 angeordnet ist. Im gezeigten Ausführungsbeispiel ist der Empfangssensor 6 in den Stoßfänger 7 integriert.

Der mehrkanalige Empfangssensor 6 umfasst mehrere optoelektronische Detektoren 8, deren jeweilige Empfangskanäle 9 vertikal aufgereiht angeordnet sind. Unter vertikaler Anordnung ist dabei zu verstehen, dass die Empfangskanäle auf einer Linie aufgereiht sind, welche senkrecht zur Fahrebene des Kraftfahrzeugs liegt. Über ihren jeweiligen Empfangskanal 9 erfassen die optoelektronischen Detektoren 8 jeweils mit ihrem optischen Öffnungswinkel 10 jeweils einen Teil 11, beziehungsweise einen Teilsektor des gesamten Sichtfelds 12 des Empfangssensors 11. Der Öffnungswinkel 10 ist dabei ein Azimutwinkel einer durch die Reihe der Empfangskanäle 9 bestimmten Ebene Zur Bestimmung eines geeigneten Öffnungswinkels 10 ist jedem Detektor 8 eine entsprechende Optik zugeordnet.

Die optoelektronischen Detektoren 8 sind Photodioden oder Avalanche-Dioden, welche bei Empfang elektromagnetischer Wellen ein entsprechendes elektrisches Signal erzeugen.

Die Sensorik 3 umfasst ferner eine oder mehrere Leuchtdioden 13, welche das seitliche Umfeld, das heißt den Detektionsbereich, mit einem entsprechenden Beleuchtungssektor 14 beleuchtet. Ein Objekt 5 im Beleuchtungssektor 14 reflektiert die auftreffenden Lichtstrahlen, wobei die entstehende Rückstreuung von einem oder mehreren Detektoren 8 erfasst werden, so dass die betreffenden Detektoren über ihren jeweiligen Empfangskanal 9 ein Empfangssignal mit einer der empfangenen Rückstreuung entsprechenden Empfangsinformation 15 erzeugen.

Im gezeigten Ausführungsbeispiel umfasst der Empfangssensor 6 sechzehn optoelektronische Detektoren 8 und entsprechend sechzehn Empfangskanäle 9. Die Empfangsinformationen 15 sämtlicher Empfangskanäle 9, welche die jeweils empfangene Rückstreuung repräsentieren, werden mit geeigneten und an sich bekannten Algorithmen der sogenannten LEDDAR-Technologie ("Light-emitting diode detection and ranging") analysiert. Hierzu ist eine Auswertungseinheit 16 vorgesehen, welcher die Empfangsinformationen 15 für jeden Empfangskanal 9 eingegeben werden. Als Ausgang der Analyse der Empfangsinformation 15 wird eine dreidimensionale Detektionsinformation 4 ermittelt. Die Detektionsinformation 4 enthält dabei dreidimensionale Lageinformationen über das Objekt 5 in dem Sichtfeld 12, welche durch Analyse der Detektionsinformation, insbesondere unter Heranziehung der Detektionsinformation anderer Empfangskanäle, in zweidimensionale Informationen individualisierbar sind. Die Analyse erfolgt dabei auf der Grundlage des Lichtlaufzeitprinzips oder der Phasenverschiebung. Als Detektionsinformation 4 werden aus den Empfangsinformationen 15 der Abstand 17 und die Höhe 18 eines Objekts 5 ermittelt. Der Abstand 17 und die Höhe 18 ergeben sich dabei aus der dreidimensionalen Lageinformation, welche aus der Analyse der Empfangsinformationen 15 gemäß der "LEDDAR"-Technologie her leitbar sind.

Die dreidimensionalen Detektionsinformationen 4 werden mit einer Zuordnung zu den jeweiligen Empfangskanälen 9 in einer virtuellen Umgebungskarte 20 abgespeichert, welche laufend aktualisiert wird. Mit der "LEDDAR"-Technologie werden die Empfangsinformationen sehr rasch kompiliert, wodurch eine rasche Folge von Aktualisierungen der Detektionsinformation 4 und damit eine Detektion mit hoher Auflösung gewährleistet ist. Bei einem fahrenden Kraftfahrzeug 1 wird die Position der Sensorik mit dem Fahrzeug ständig verändert, wobei durch die rasche Aktualisierung in kurzer Folge von jeweils aktuellen Fahrzeugpositionen 19 sehr genaue Detektionsinformationen 4 mit der hohen Auflösung der "LEDDAR"-Sensorik zur Verfügung steht.

Die ermittelten Detektionsinformationen 4, das heißt die Höhe 18 und der Abstand 17 von Objekten 5, wie zum Beispiel Randsteine, Fahrbahnbegrenzungen, Engstellen und sonstigen Objekte am Fahrbahnrand mit der hohen Auflösungsgenauigkeit der "LEDDAR"-Sensorik und der jeweiligen Position jedes Empfangskanals 9 für jeden der im Ausführungsbeispiel sechzehn Empfangskanäle 9 werden in einer virtuellen Umgebungskarte 20 abgespeichert. Die Empfangsinformationen 15 werden bei der laufenden Analyse sehr rasch kompiliert, wodurch eine rasche Folge von Aktualisierungen der Detektionsinformation 4 und damit einer Detektion mit hoher Auflösung gewährleistet ist.

Die virtuelle Umgebungskarte 19 wird einer Aktorik 21 des Fahrerassistenzsystems 2 bereitgestellt. Hierzu hat eine elektronische Steuereinheit 22 Zugriff auf die laufend aktualisierten Informationen der virtuellen Umgebungskarte 19.

Die Sensorik 3 wird in Abhängigkeit einer Aktivierungsinformation 23 aktiviert, nämlich in Abhängigkeit einer vorgegebenen Geschwindigkeit des Kraftfahrzeugs 1 oder bei Eintritt eines bestimmten, vorgegebenen Ereignisses. Soll die Aktivierung der Sensorik 3 in Abhängigkeit der Geschwindigkeit des Kraftfahrzeugs 1 erfolgen, so wird bei Überschreiten oder Unterschreiten eines vorgegebenen Schwellwerts die Sensorik 3 aktiviert. Die Aktivierungsinformation 23 wird der Steuereinheit 22 des Fahrerassistenzsystems 2 zugeführt, welche die Aktorik 21 unter Berücksichtigung der virtuellen Umgebungskarte 20 steuert.

Die erfindungsgemäße Ermittlung von dreidimensionalen Detektionsinformationen und Bereitstellung dieser Detektionsinformationen für die Aktorik 21 eines Fahrerassistenzsystems, vorzugsweise in einer virtuellen Umgebungskarte, wird gemäß einem Aspekt der Erfindung für aktive oder passive Assistenzfunktionen zur Parkhilfe verwendet. Dabei werden mittels des mehrkanaligen Empfangssensors Parklücken vermessen, wobei die Tiefe und die Höhe sowie der Abstand darin befindlicher Objekte erfasst werden kann und die Aktorik entsprechend ihrer Funktion geeignete Maßnahmen durchführt.

Die Aktorik 21 ist in einem weiteren Ausführungsbeispiel für aktive oder passive Assistenzfunktionen zur Reaktion auf Fahrbahnverengungen und/ oder nah am Fahrzeug liegende Objekte im Umfeld des Kraftfahrzeugs verwendet.

In einem weiteren Ausführungsbeispiel ist die Aktorik 21 für aktive oder passive Assistenzfunktionen für Seitentürsysteme eines Kraftfahrzeugs verwendet. Dabei kann das Assistenzsystem die Überwachung der Seitentür übernehmen oder steuern. Bei drohender Kollision ist vorteilhaft eine Warnung vorgesehen oder ein Eingriff in die Türbewegung. Dabei wird die Türbewegung aktiv gestoppt, um Schäden an der Tür zu vermeiden.

### Bezugszeichenliste

- 1.: Kraftfahrzeug
- 2.: Fahrerassistenzsystem
- 3.: Sensorik
- 4.: Detektionsinformation
- 5.: Objekt
- 6.: Empfangssensor
- 7.: Stoßfänger
- 8.: Detektor
- 9.: Empfangskanal
- 10.: Öffnungswinkel
- 11.: Teil
- 12.: Sichtfeld
- 13.: Leuchtdiode
- 14.: Beleuchtungssektor
- 15.: Empfangsinformation
- 16.: Auswertungseinheit
- 17.: Abstand
- 18.: Höhe
- 19.: Fahrzeugposition
- 20.: Umgebungskarte
- 21.: Aktorik
- 22.: Steuereinheit
- 23.: Aktivierungsinformation

## Patentansprüche

1. Verfahren zum Betrieb eines Fahrerassistenzsystems (2) für Kraftfahrzeuge (1) zur Umsetzung mindestens einer auf das seitliche Umfeld des Kraftfahrzeugs (1) bezogenen Assistenzfunktion, wobei mittels einer Sensorik (3) Detektionsinformationen (4) über Objekte (5) im seitlichen Umfeld erfasst und eine Aktorik (21) die Assistenzfunktion in Abhängigkeit der Detektionsinformation (4) der Sensorik (3) ausführt,
**dadurch gekennzeichnet, dass**
die Sensorik (3) das Umfeld beleuchtet und mittels eines mehrkanaligen Empfangssensors (6) mit mehreren vertikal aufgereihten Empfangskanälen (9) jeweiliger optoelektronischer Detektoren (8), welche jeweils mit ihrem optischen Öffnungswinkel (10) einen Teil (11) des gesamten Sichtfelds (12) des Empfangssensors (6) erfassen, an Objekten (5) reflektiertes Licht empfängt und die Detektoren (8) jeweils eine der empfangenen Rückstreuung entsprechende Empfangsinformation (15) bereitstellen, wobei eine Auswertungseinheit (16) aus den Empfangsinformationen (15) der Detektoren (8) dreidimensionale Detektionsinformationen (4) ermittelt und der Aktorik (21) bereitstellt.

2. Verfahren nach Anspruch 1,
**dadurch gekennzeichnet, dass**
aus der Empfangsinformation (15) der Abstand (17) und die Höhe (18) eines Objekts (5) als Detektionsinformation (4) ermittelt wird.

3. Verfahren nach Anspruch 1 oder 2,
**dadurch gekennzeichnet, dass**
die dreidimensionalen Detektionsinformationen (4) der Detektoren (8) mit einer Zuordnung zu den jeweiligen Empfangskanälen (9) in einer virtuellen Umgebungskarte (20) abgespeichert und laufend aktualisiert werden, welche der Aktorik (21) bereitgestellt wird.

4. Verfahren nach einem der vorhergehenden Ansprüche,
**dadurch gekennzeichnet, dass**
die Sensorik (3) in Abhängigkeit einer vorgegebenen Geschwindigkeit des Kraftfahrzeugs (1) oder bei Eintritt eines bestimmten Ereignisses aktiviert wird.

5. Fahrerassistenzsystem für Kraftfahrzeuge (1), zur Umsetzung mindestens einer auf das seitliche Umfeld des Kraftfahrzeugs (1) bezogenen Assistenzfunktion, mit einer Sensorik (3), welche zur Erfassung von Detektionsinformationen (4) über Objekte (5) im seitlichen Umfeld ausgebildet ist, und mit einer Aktorik (21), welche zur Ausführung der Assistenzfunktion unter Berücksichtigung der Detektionsinformation (4) ausgebildet ist,
**dadurch gekennzeichnet, dass**
die Sensorik (3) ein zur Beleuchtung des Umfelds angeordnetes Leuchtmittel 13 und einen mehrkanaligen optoelektronischen Empfangssensor (6) aufweist, welcher mehrere in vertikal aufgereihten Empfangskanälen (9) liegende und dabei mit ihrem jeweiligen optischen Öffnungswinkel (10) einen Teil (11) des gesamten Sichtfelds (12) des Empfangssensors (6) erfassende optoelektronische Detektoren (8) zum Empfang an Objekten (5) reflektierten Lichts und Bereitstellung der empfangenen Rückstreuung entsprechender Empfangsinformation (15) umfasst, und mit einer Auswertungseinheit (16), welche zur Ermittlung einer dreidimensionalen Detektionsinformation (4) aus den Empfangsinformationen (15) der Detektoren (8) ausgebildet ist.

6. Fahrerassistenzsystem nach Anspruch 5,
**gekennzeichnet durch**
eine Leuchtdiode (13) als Leuchtmittel.

7. Fahrerassistenzsystem nach Anspruch 5 oder 6,
**gekennzeichnet durch**
eine Sensorik (3) mit 16 Empfangskanälen (9).

8. Kraftfahrzeug mit einem Fahrerassistenzsystem nach einem der Ansprüche 5 bis 7.

9. Kraftfahrzeug nach Anspruch 8,
**dadurch gekennzeichnet, dass**
die Empfangskanäle (9) der Detektoren (8) im Bereich eines Stoßfängers (7) des Kraftfahrzeugs (1) angeordnet sind.

10. Verwendung eines Verfahrens nach einem der Ansprüche 1 bis 4 oder eines Fahrerassistenzsystems (2) nach einem der Ansprüche 5 bis 7 für aktive oder passive Assistenzfunktionen zur Parkhilfe, wobei mittels des mehrkanaligen Empfangssensors (6) Parklücken vermessen werden.

11. Verwendung eines Verfahrens nach einem der Ansprüche 1 bis 4 oder eines Fahrerassistenzsystems (2) nach einem der Ansprüche 5 bis 7 für aktive oder passive Assistenzfunktionen zur Reaktion auf Fahrbahnverengungen und/oder nah am Kraftfahrzeug (1) liegende Objekte (5).

12. Verwendung eines Verfahrens nach einem der Ansprüche 1 bis 4 oder eines Fahrerassistenzsystems (2) nach einem der Ansprüche 5 bis 7 für aktive oder passive Assistenzfunktionen für Seitentürsysteme eines Kraftfahrzeugs (1).
